# EUROPÄISCHE PATENTSCHRIFT

(11) **EP 2 743 032 B1**
(45) Veröffentlichungstag und Bekanntmachung des Hinweises auf die Patenterteilung: **16.09.2015**
(21) Anmeldenummer: 13158578.8
(22) Anmeldetag: 11.03.2013
(51) Int. Cl.: B24B 39/04, F16C 19/00

(54) **Verfahren zum Bearbeiten eines Oberflächenbereichs eines Wälzlagerrings und Wälzlagerring sowie Wälzlager**
Method for processing a surface area of a roller bearing ring and roller bearing ring and roller bearing
Procédé de traitement d'une zone de surface d'une bague de roulement et bague de roulement ainsi que palier à roulement

(30) Priorität: 17.12.2012 DE 102012223475
(43) Veröffentlichungstag der Anmeldung: 18.06.2014
(73) Patentinhaber: Aktiebolaget SKF, 41550 Göteborg (SE)
(72) Erfinder: von Schleinitz, Thilo, 97422 Schweinfurt (DE)
(74) Vertreter: Schonecke, Mitja

(56) Entgegenhaltungen:
- EP-A1- 1 505 306
- GB-A- 953 797
- US-A- 3 696 483

## Beschreibung

Die Erfindung betrifft ein Verfahren zum Bearbeiten eines Oberflächenbereichs eines Wälzlagerrings. Weiterhin betrifft die Erfindung einen Wälzlagerring und ein Wälzlager.

Es ist bereits bekannt, eine gleitende oder abrollende Werkzeugspitze, die beispielsweise als eine Kugel, eine Halbkugel, eine Scheibe oder ein Rad ausgebildet ist, auf ein Werkstück zu drücken und, bei entsprechender Rotation des Werkstückes, über dessen Oberfläche zu bewegen. Eine derartige Vorgehensweise wird meist als Rollieren, Glattwalzen oder Festwalzen bezeichnet und hat eine spanlose Glättung der Oberflächenrauheit des Werkstücks und die Erzeugung von Druckeigenspannungen im Werkstück zur Folge. Die Druckeigenspannungen können über die Andruckkraft der Werkzeugspitze gegen das Werkstück in ihrer Stärke und über die Größe der Berührfläche, z.B. den Radius der Werkzeugspitzenkugel oder -halbkugel, in ihrem Tiefenverlauf beeinflusst werden. Die Festigkeit und der Verschleißwiderstand der Oberfläche, ihre dynamische Stabilität (Ermüdungsgrenze, Schwingfestigkeit) und ihr Traganteil können erhöht werden; Rissbildungen werden durch Druckeigenspannungen erschwert. Glatte kaltverfestigte Oberflächen haben zudem einen erhöhten Korrosionswiderstand.

Bei den bekannten Werkzeugen wird die harte Werkzeugspitze über Tellerfederpakete oder über eine Wasser- oder Ölhydraulik an das Werkstück gedrückt. Die Werkzeugspitze ist bei gefederten Versionen als über die Oberfläche rollende Kugel aus Keramik oder als über die Oberfläche gleitende Halbkugel aus Diamant ausgelegt, bei hydraulischen Lösungen bevorzugt als hydrostatisch gelagerte und abrollende Keramikkugel.

Im Falle der Tellerfederpakete werden eine besonders kompakte Bauform und ein rascher Kraftaufbau bei Werkstück-Werkzeug-Kontakt erreicht. Allerdings ist bereits bei geringen Abweichungen von der Soll-Andruckstellung, die sich aus Positionierfehlem wie aus der Werkstückkontur ergeben können, eine erhebliche Abweichung in der Bearbeitungskraft festzustellen. Ebenso führt die Hysterese der Tellerfederpakete bei Be- und Entlasten zu schwankenden Bearbeitungskräften. Die sehr harte Federung tendiert bei entsprechender Werkstückrauhigkeit zu einer harten Schwingung der Werkzeugspitze, welche die Oberflächenqualität beeinflusst, insbesondere aber die Standzeit der Werkzeugspitze herabsetzt.

Im Falle der Hydraulik wird über einen im Werkzeug integrierten Zylinder ein Hubbereich mit konstanter Andruckkraft realisiert. Diese Lösung besitzt zwar eine einstellbare und konstante Andruckkraft, hat jedoch andere Nachteile. So wird ein Hydraulikaggregat benötigt, dessen Verbindungsbedarf mit dem Werkzeug meist die Verwendung eines automatischen Werkzeugwechslers in der Bearbeitungsmaschine ausschließt. Viele Bearbeitungsmaschinen arbeiten außerdem mit wasserbasierender Emulsion als Kühlschmiermittel, wodurch die Verwendung von Öl im Werkzeug wegen der Anreicherungsgefahr in der Emulsion unerwünscht sein kann. Dann muss die Hydraulik mit Emulsion betrieben werden, was neben der ungünstigeren Schmierung und Druckfestigkeit aufgrund ihres in Bearbeitungsmaschinen typischen Gehaltes an harten und/oder abrasiven Partikeln trotz Filtration zu einer Lebensdauerverringerung des Hydraulikaggregates wie auch des Werkzeuges führt. Beim Gleiten der Werkzeugspitze über die Partikel oder beim Überrollen der Partikel durch die Werkzeugspitze kann es zu einer Beschädigung der Werkzeugspitze und/oder des Werkstücks kommen.

Die EP 1 505 306 A1 offenbart ein Verfahren zum spanlosen Bearbeiten eines Oberflächenbereichs eines Wälzlagerrings, wobei der Wälzlagerring relativ zu einem Werkzeug, das eine Werkzeugspitze aufweist, in Rotation versetzt wird, die Werkzeugspitze des Werkzeugs über den Oberflächenbereich geführt und dabei mit einer Andruckkraft gegen den Oberflächenbereich gepresst wird.

Das erfindungsgemäße Verfahren unterscheidet sich von dem bekannten Verfahren dadurch, dass zwei Werkzeuge verwendet werden und die Werkzeugspitzen der beiden Werkzeuge ausgehend von verschiedenen Startpositionen in bezüglich des Oberflächenbereichs des rotierenden Wälzlagerrings zueinander gegenläufiger Bewegung über den Oberflächenbereich geführt und dabei mit einer Andruckkraft gegen den Oberflächenbereich gepresst werden, so dass auf dem Oberflächenbereich von jeder Werkzeugspitze eine schraubenlinienförmige oder eine spiralförmige Bahnkurve derart ausgebildet wird, dass sich die Bahnkurven bereichsweise überlappen und im Überlappungsbereich einander vielfach kreuzen.

Die EP 1 505 306 A1 offenbart ebenfalls einen Wälzlagerring mit einem Oberflächenbereich, der ein Druckeigenspannungsmuster aufweist.

Der erfindungsgemäße Wälzlagerring unterscheidet sich somit von dem bekannten Wälzlagerring durch einen Oberflächenbereich der zwei schraubenlinienförmig oder spiralförmig ausgebildete Druckeigenspannungsmuster aufweist, die bereichsweise überlappen und sich im Überlappungsbereich vielfach kreuzen.

Der Erfindung liegt die Aufgabe zugrunde, im Umfeld einer Serienproduktion mit einem möglichst geringen Werkzeugverschleiß eine spanlose Glättung eines Oberflächenbereichs eines Wälzlagerrings zu erzielen und/oder in Größe und Tiefenverlauf definierte Druckeigenspannungen innerhalb eines Oberflächenbereichs eines Wälzlagerrings zu erzeugen.

Diese Aufgabe wird durch ein Verfahren zum spanlosen Bearbeiten eines Oberflächenbereichs eines Wälzlagerrings gelöst. Beim erfindungsgemäßen Verfahren wird der Wälzlagerring relativ zu zwei Werkzeugen, die je eine Werkzeugspitze aufweisen, in Rotation versetzt. Die Werkzeugspitzen der beiden Werkzeuge werden ausgehend von verschiede-nen Startpositionen in bezüglich des Oberflächenbereichs des rotierenden Wälzlagerrings zueinander gegenläufiger Bewegung über den Oberflächenbereich geführt und dabei mit einer Andruckkraft gegen den Oberflächenbereich gepresst, so dass auf dem Oberflächenbereich von jeder Werkzeugspitze eine schraubenlinienförmige oder ein spiralförmige Bahnkurve derart ausgebildet wird, dass sich die Bahnkurven bereichsweise überlappen und im Überlappungsbereich einander vielfach kreuzen.

Die Erfindung hat den Vorteil, dass sie mit vertretbarem Aufwand eine serienproduktionstaugliche Glättung eines Oberflächenbereichs eines Wälzlagerrings und/oder eine defmierte Erzeugung von Druckeigenspannungen innerhalb eines Oberflächenbereichs eines Wälzlagerrings ermöglicht. Dabei ist es besonders vorteilhaft, dass der Werkzeugverschleiß sehr gering gehalten werden kann. Ein mit dem erfindungsgemäßen Verfahren bearbeiteter Wälzlagerring weist eine lange Lebensdauer auf. Durch das vielfache Kreuzen gegenläufiger gewindeartiger Werkzeugbahnen auf der Werkstückoberfläche haben die Bahnkurven an jeder Stelle andere Abstände voneinander und somit ständig variierende Spannungszustände. Eine Rissvorzugsrichtung im Sinne einer Strecke konstanter abgesenkter Druckeigenspannung wird vermieden.

Es können Werkzeugspitzen eingesetzt werden, die aus Diamant gefertigt sind.

Die Werkzeugspitzen der beiden Werkzeuge können ausgehend von Startpositionen, die bezogen auf die Rotation des Wälzlagerrings um 180° zueinander versetzt sind, über den Oberflächenbereich geführt werden. Dies hat den Vorteil, dass sich die durch die Bearbeitung auf den Wälzlagerring ausgeübten Kräfte nahezu kompensieren und somit nicht von der Werkstückaufnahme abgestützt werden müssen.

Die Werkzeugspitze wenigstens eines der beiden Werkzeuge kann ausgehend von einer Startposition, die bezogen auf die Rotation des Wälzlagerrings in einem radialen und/oder axialen Endbereich des Oberflächenbereichs angeordnet ist, über den Oberflächenbereich geführt werden.

Die Werkzeugspitzen der beiden Werkzeuge können ausgehend von bezogen auf die Rotation des Wälzlagerrings zueinander entgegengesetzten radialen und/oder axialen Endbereichen des Oberflächenbereichs über den Oberflächenbereich geführt werden. Die Werkzeugspitzen der beiden Werkzeuge können mit bezogen auf die Rotation des Wälzlagerrings zueinander entgegengesetzten axialen und/oder radialen Bewegungskomponenten über den Oberflächenbereich geführt werden. Diese Vorgehensweise hat den Vorteil, dass etwaige durch die erfindungsgemäße Bearbeitung hervorgerufene Verzüge des Wälzlagerrings gering gehalten und symmetrisch gestaltet werden können.

Die Bahnkurven können bereichsweise nicht überlappend ausgebildet werden. Dadurch ist eine schrittweise Angleichung an die nicht bearbeitete Umgebung möglich.

Der Überlappungsbereich kann sich wenigstens über eine Hauptbelastungszone des Oberflächenbereichs erstrecken, in der ein Lastverhältnis, das als das Verhältnis der bei einer maximal zulässigen Belastung des Wälzlagerrings am jeweiligen Ort auftretenden Last zu einer im gesamten Oberflächenbereich maximal auftretenden Last definiert ist, durchgehend wenigstens einen vorgegebenen Mindestwert aufweist. Der Mindestwert für das Lastverhältnis kann beispielsweise 0,8 betragen. Ebenso ist es möglich, einen Mindestwert für das Lastverhältnis von 0,5 vorzugeben. Durch diese Vorgehensweise kann sichergestellt werden, dass der Wälzlager in besonders kritischen Bereichen besonders gut bearbeitet ist.

Die Startpositionen der Werkzeugspitzen der beiden Werkzeuge können jeweils außerhalb der Hauptbelastungszone liegen. Auf diese Weise kann eine möglicherweise folgenschwere Beschädigung des Oberflächenbereichs in der Hauptlastzone vermieden werden.

Im Rahmen des erfindungsgemäßen Verfahrens kann so vorgegangen werden, dass die Werkzeugspitze wenigstens eines der beiden Werkzeuge beim Bearbeiten des Wälzlagerrings innerhalb einer Kontaktzone berührend am Oberflächenbereich des Wälzlagerrings anliegt, die Andruckkraft längs einer Kraftrichtung wirkt und in einer Vorschubebene, die durch eine in der Kontaktzone senkrecht zum Oberflächenbereich orientierten Oberflächennormale und eine Vorschubrichtung, in der das Werkzeug bewegt wird, aufgespannt ist, die Kraftrichtung zur Vorschubrichtung hin geneigt ist und einen Winkel von wenigstens 2° mit der Oberflächennormalen einschließt. Dies hat den Vorteil einer weiteren Verschleißreduktion. Die Kraftrichtung kann einen Winkel von maximal 15° mit der Oberflächennormalen einschließen. Insbesondere kann die Kraftrichtung einen Winkel von wenigstens 5° und/oder maximal 10° mit der Oberflächennormalen einschließen. In einer senkrecht zur Vorschubebene aufgespannten Ebene kann die Kraftrichtung einen Winkel von maximal 1° mit der Oberflächennormalen einschließen. Bezogen auf die Umfangsrichtung des Wälzlagerrings kann die Kraftrichtung parallel zur Oberflächennormale verlaufen. Dabei wird von einer Parallelität ausgegangen, wenn der eingeschlossene Winkel kleiner als 1° ist. Demgemäß kann die Kraftrichtung ausschließlich innerhalb der Vorschubebene geneigt sein.

Die Werkzeugspitze wenigstens eines der beiden Werkzeuge kann mit einer Geschwindigkeit von 0,05 mm/Umdrehung bis 0,15 mm/Umdrehung bewegt werden. Eine höhere Geschwindigkeit hat eine Rillenstruktur mit schlechterer Rauheit und eine sehr inhomogene Verteilung der Druckeigenspannungen zur Folge. Eine niedrigere Geschwindigkeit führt zu einer sehr hohen Werkstoffbelastung und zu einer unwirtschaftlichen Bearbeitungsdauer.

Der Oberflächenbereich kann eine Bahngeschwindigkeit von 50 m/min bis 150 m/min aufweisen. Eine höhere Geschwindigkeit reduziert die Lebensdauer der Werkzeugspitze. Eine geringere Geschwindigkeit erschwert das schwingungs- und reibungsarme Gleiten der Werkzeugspitze auf dem Flüssigkeitsfilm.

Die Werkzeugspitze wenigstens eines der beiden Werkzeuge kann mit einer Andruckkraft von 200 N bis 750 N gegen den Oberflächenbereich gepresst werden. Dieser Bereich gilt insbesondere für eine Werkzeugspitze, die einen Krümmungsradius von 3 mm aufweist. Bei einem kleineren Krümmungsradius verringert sich die benötigte Andruckkraft tendenziell, bei einem größeren Krümmungsradius erhöht sich die benötigte Andruckkraft tendenziell. Bei Wälzlagerringen mit kleinen Durchmessern kann eine geringere Andruckkraft zum Einsatz kommen als bei Wälzlagerringen mit großen Durchmessern. Zur Glättung wird eine geringere Andruckkraft verwendet als zur Erzeugung von Druckeigenspannungen. Die Andruckkraft kann abhängig von der Laufstrecke, die mit derselben Werkzeugspitze bereits zurückgelegt wurde, erhöht werden. Dadurch kann eine verringerte Wirkung der Werkzeugspitze infolge einer verschleißbedingten Abplattung kompensiert werden.

In Vorschubrichtung des Werkzeugs und in Rotationsrichtung des Wälzlagerrings vor der Werkzeugspitze auf dem Oberflächenbereich des Wälzlagerrings kann ein Film aus einem Kühl- und/oder Schmiermedium ausgebildet werden. Insbesondere kann durch Zufuhr eines Kühl- und oder Schmiermediums ein Aufschwimmen der Werkzeugspitze und dadurch eine zumindest teilweise Trennung zwischen der Werkzeugspitze und dem Oberflächenbereich erreicht werden. Dies trägt zu einer Verminderung des Verschleißes der Werkzeugspitze bei.

Der Oberflächenbereich kann nach dem spanlosen Bearbeiten gehont oder einer Gleitschleifbehandlung unterzogen werden. Dadurch können Oberflächenschäden ohne eine nennenswerte Beeinflussung der mit dem erfindungsgemäßen Verfahren erzeugten Druckeigenspannungsverteilung beseitigt oder zumindest reduziert werden.

Die Erfindung bezieht sich weiterhin auf einen Wälzlagerring mit einem Oberflächenbereich, der zwei schraubenlinienförmig oder spiralförmig ausgebildete Druckeigenspannungsmuster aufweist, die bereichsweise überlappen und sich im Überlappungsbereich vielfach kreuzen.

Der erfindungsgemäße Wälzlagerring zeichnet sich durch eine hohe Lebensdauer aus und ist sehr beständig gegen eine Rissbildung. Die gewählte Geometrie der Druckeigenspannungsmuster hat ständig variierende Spannungszustände zur Folge. Eine Rissvorzugsrichtung im Sinne einer Strecke konstanter abgesenkter Druckeigenspannung wird vermieden.

Die Druckeigenspannungsmuster können durch spanlos eingeformte Vertiefungen ausgebildet sein. Die Druckeigenspannungsmuster können einen zueinander entgegengesetzten Drehsinn aufweisen.

Außerdem bezieht sich die Erfindung auf ein Wälzlager mit einem erfindungsgemäß ausgebildeten Wälzlagerring.

Das elastische Element kann eine elastische Konstante von maximal 200 N/mm, vorzugsweise maximal 150 N/mm, besonders bevorzugt maximal 100 N/mm, aufweisen. Eine derart flache elastische Kennlinie hat den Vorteil, dass die Anpresskraft der Werkzeugspitze gegen den Oberflächenbereich des Wälzlagerrings nur geringfügig variiert, wenn sich die Position des Oberflächenbereichs in Kraftrichtung ändert. Die flache elastische Kennlinie führt auch bei gewissen Abweichungen von der Soll-Einfederung zu einer nur sehr gering abweichenden Bearbeitungskraft, und verhindert als weiche Federung gleichzeitig die Überlastung der Werkzeugspitze bei Werkstückrauhigkeiten, wodurch sich die Standzeit wesentlich erhöht. Eine Positionsänderung und eine damit verbundene Abweichung von der Soll-Einfederung können insbesondere bei großen Werkstücken mit ihrer naturgemäß größeren Maß-, Winkel- und Positionstoleranz auftreten oder in Fällen, bei denen das Profil des bearbeiteten Oberflächenbereichs mit dem Werkzeug lediglich näherungsweise nachgefahren wird in dem beispielsweise gekrümmte Abschnitte durch Geraden angenähert werden. In solchen Fällen ist eine besonders kleine elastische Konstante erforderlich. Treten dagegen nur sehr geringe Toleranzen auf, lassen sich auch mit einer größeren elastischen Konstante noch gute Ergebnisse erzielen.

Das elastische Element kann eine Vorspannung von wenigstens 200 N aufweisen. Dabei sind zum Glätten des Oberflächenbereichs in der Regel geringere Vorspannungen ausreichend als zum Erzeugen von ausreichend hohen Druckeigenspannungen. Die Vorspannung kann maximal 750 N betragen. Diese Werte gelten insbesondere für eine Werkzeugspitze mit einem Krümmungsradius von 3 mm.

Das elastische Element kann beispielsweise als eine Schraubenfeder ausgebildet sein. Bei einer Schraubenfeder lässt sich eine flache elastische Kennlinie sehr einfach realisieren. Außerdem sind Schraubenfedern in nahezu allen erdenklichen Abmessungen und mit nahezu allen erdenklichen elastischen Kennlinien kostengünstig verfügbar. Ein weiterer Vorteil von Schraubenfedern ist, dass diese sehr robust sind. Besonders geeignet ist eine Schraubenfeder mit einem rechteckigen Drahtquerschnitt.

Wenigstens ein Ende des elastischen Elements kann drehbar gelagert sein. Vorzugsweise sind beide Enden der Schraubenfeder drehbar gelagert. Insbesondere kann wenigstens ein Ende der Schraubenfeder mittels eines Gleitlagers drehbar gelagert sein. Durch eine drehbare Lagerung kann verhindert werden, dass störende Torsionsmomente ausgebildet werden.

Durch den Begriff Werkzeugspitze soll zum Ausdruck gebracht werden, dass es sich um ein Endstück des Werkzeugs handelt. Eine Einschränkung auf eine spitze Formgebung beispielsweise mit einem extrem kleinen Krümmungsradius soll damit nicht verbunden sein. Insbesondere kann die Werkzeugspitze auch abgerundet sein. Ein repräsentativer Durchmesser der Werkzeugspitze kann zwischen 3 mm und 9 mm betragen. Vorzugsweise beträgt der repräsentativer Durchmesser der Werkzeugspitze zwischen 5 mm und 7 mm. Mit kleineren Durchmessern lässt sich keine effiziente Bearbeitung erreichen und es können nur sehr oberflächennahe Druckeigenspannungen erzeugt werden. Bei größeren Durchmessern ist es sehr schwierig, eine Bearbeitung von Randbereichen zu ermöglichen und es werden zu hohe Andruckkräfte benötigt. Der repräsentative Durchmesser der Werkzeugspitze kann als Durchmesser einer mittels eines Least Square Fits ermittelten bestpassenden Sphäre definiert sein. Insbesondere kann die Werkzeugspitze bereichsweise sphärisch ausgebildet sein.

In der Regel sind die Geschwindigkeit des Werkzeugs und die Geschwindigkeit der Werkzeugspitze identisch und können in vielen Fällen austauschbar verwendet werden.

Die Erfindung wird im Folgenden anhand der Figuren näher erläutert. Es zeigen:
- Figur 1: eine Teilansicht eines Ausführungsbeispiels einer Bearbeitungsmaschine während des Betriebs in einer schematischen Seitenansicht,
- Figur 2: ein Ausführungsbeispiel des erfindungsgemäßen Werkzeugs in einer schematischen Schnittdarstellung,
- Figur 3: den Beginn und das Ende der Bearbeitung des Wälzlagerrings in einer stark abstrahierten Darstellung,
- Figur 4: eine schematische Darstellung zweier Varianten der Positionierung und Winkelausrichtung der beiden Werkzeuge relativ zum Wälzlagerring und
- Figur 5: eine stark vergrößerte und idealisierte Darstellung eines Musters von Bahnkurven, die von den Werkzeugspitzen der beiden Werkzeuge bei der Bearbeitung auf der Laufbahn des Wälzlagerrings ausgebildet werden.

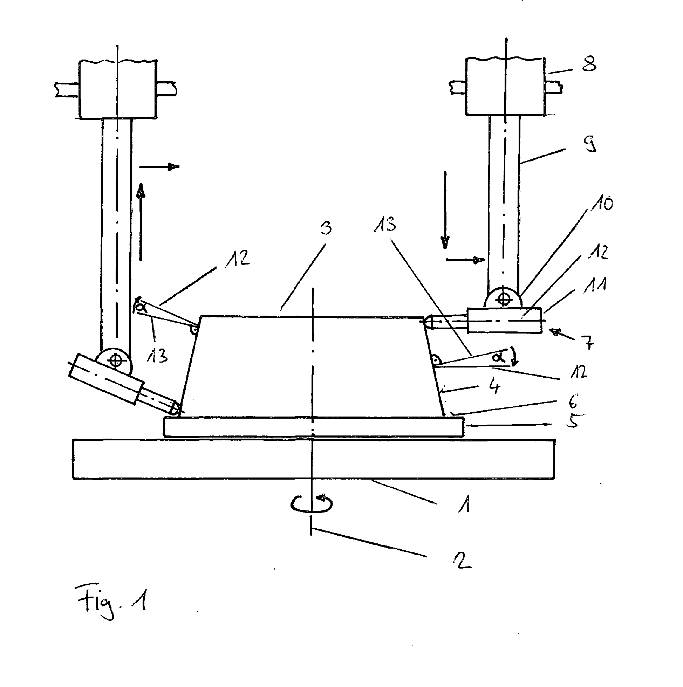

Figur 1 zeigt eine Teilansicht eines Ausführungsbeispiels einer Bearbeitungsmaschine während des Betriebs in einer schematischen Seitenansicht.

Die Bearbeitungsmaschine weist eine Werkstückaufnahme 1 auf, die um eine Drehachse 2 drehbar gelagert ist. Auf der Werkstückaufnahme 1 ist ein Wälzlagerring 3 angeordnet und drehfest mit der Werkstückaufnahme 1 verbunden. Der Wälzlagerring 3 ist rotationssymmetrisch zur Drehachse 2 auf der Werkstückaufnahme 1 angeordnet. Die Richtung parallel zur Drehachse 2 der Werkstückaufnahme 1 wird im Folgenden als Axialrichtung, die Richtung senkrecht zur Drehachse 2 der Werkstückaufnahme 1 wird im Folgenden als Radialrichtung bezeichnet. Die drehfeste Verbindung zwischen dem Wälzlagerring 3 und der Werkstückaufnahme 1 kann beispielsweise durch eine magnetische Fixierung oder mittels nicht figürlich dargestellter Spannbacken, welche den Wälzlagerring 3 klemmen, erfolgen. Ebenso ist auch eine Kombination aus magnetischer Fixierung und mechanischer Klemmung möglich. Beim dargestellten Ausführungsbeispiel ist der Wälzlagerring 3 als ein Innenring eines Kegelrollenlagers ausgebildet und weist eine konische Laufbahn 4 und im Bereich eines axialen Endes einen Anlaufbord 5 mit einer Anlauffläche 6 auf. Die Laufbahn 4 und die Anlauffläche 6 können mit der Bearbeitungsmaschine bearbeitet werden und werden im Folgenden auch unter den generischen Begriff "Oberflächenbereich" subsumiert. Unter dem Oberflächenbereich ist somit die Laufbahn 4 und/oder die Anlauffläche 6 und/oder ein sonstiger zu bearbeitender Teilbereich der Oberfläche des Wälzlagerrings 3 zu verstehen.

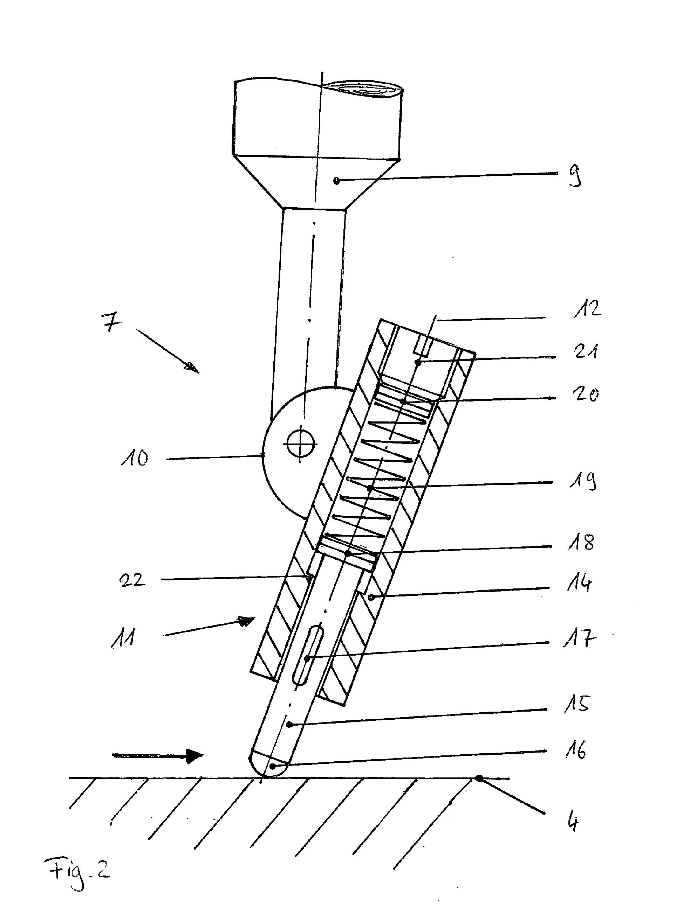

Radial neben dem Wälzlagerring 3 sind zwei Werkzeuge 7 auf bzgl. der Drehachse 2 der Werkstückaufnahme 1 zueinander diametral gegenüberliegenden Seiten angeordnet. Mit anderen Worten, die Werkzeuge 7 sind um 180° in Umfangsrichtung des Wälzlagerrings 3 zueinander versetzt angeordnet. Ein Ausführungsbeispiel der Werkzeuge 7 ist in Figur 2 dargestellt. Die Werkzeuge 7 sind jeweils in einer Werkzeugaufnahme 8 fixiert, welche die Werkzeuge 7 in Axial- und Radialrichtung sowie in Kombinationen dieser Richtungen bewegen kann. Die Bewegung in Axial- und Radialrichtung ist in Figur 1 durch Pfeile angedeutet. Die Werkzeugaufnahmen 8 sind so konstruiert, dass ein schneller Werkzeugwechsel möglich ist. Insbesondere können die Werkzeugaufnahmen 8 und die nicht figürlich dargestellten sonstigen Komponenten der Bearbeitungsmaschine in analoger Weise wie bei einer Hartdrehmaschine ausgebildet sein. Beispielsweise können die Werkzeugaufnahmen 8 als so genannte Capto-Aufnahmen ausgebildet sein. Die Werkzeuge 7 sind allerdings völlig anders aufgebaut als dies bei den Werkzeugen einer Hartdrehmaschine der Fall ist. Abweichend von der Darstellung der Figur 1 ist es prinzipiell auch möglich, dass die Bearbeitungsmaschine lediglich ein einziges Werkzeug 7 aufweist oder dass die Bearbeitungsmaschine ein erfindungsgemäßes Werkzeug 7 und ein andersartig ausgebildetes Bearbeitungswerkzeug, beispielsweise ein Hartdrehwerkzeug, aufweist.

Die Werkzeuge 7 weisen jeweils ein Anschlussstück 9, eine Schwenkvorrichtung 10 und ein Kopfteil 11 auf. Das Anschlussstück 9 ist in der Werkzeugaufnahme 8 der Bearbeitungsmaschine eingespannt. Das Kopfteil 11 weist eine Längsachse 12 auf und ist mittels der Schwenkvorrichtung 10 relativ zum Anschlussstück 9 schwenkbar. Durch die Schwenkbewegung ändert sich ein Winkel α, den die Längsachse 12 des Kopfteils 11 mit einer Oberflächennormalen 13 einschließt, welche senkrecht zum bearbeiteten Oberflächenbereich, beispielsweise der Laufbahn 4 oder der Anlauffläche 6, orientiert ist. Zur Veranschaulichung dieser Geometrie sind die Längsachsen 12 der Kopfteile 11 der beiden Werkzeuge 7 und die Oberflächennormalen 13 in Figur 1 jeweils nochmals separat für eine andere Bearbeitungsposition dargestellt.

Figur 2 zeigt ein Ausführungsbeispiel des Werkzeugs 7 in einer schematischen Schnittdarstellung. Im Folgenden wird insbesondere der Aufbau des Kopfteils 11 näher erläutert.

Das Kopfteil 11 weist ein Gehäuse 14 auf, das beispielsweise die Form eines Hohlzylinders haben kann und einen Spitzenträger 15 partiell aufnimmt. Der Spitzenträger 15 ist beispielsweise als ein Stößel ausgebildet und koaxial zur Längsachse 12 des Kopfteils 11 angeordnet. Im Bereich desjenigen axialen Endes des Spitzenträgers 15, das aus dem Gehäuse 14 heraus ragt, ist eine Werkzeugspitze 16 am Spitzenträger 15 befestigt, insbesondere angelötet. Die Werkzeugspitze 16 kann insbesondere aus Diamant gefertigt sein. Die Werkzeugspitze 16 weist beispielsweise die Form einer Halbkugel auf und ist so am Spitzenträger 15 angebracht, dass eine vorgegebene Orientierung zwischen dem Kopfteil 11 und dem Diamantkristallgitter eingehalten wird. Die Halbkugel weist einen Durchmesser zwischen 3 mm und 9 mm, vorzugsweise zwischen 5 mm und 7 mm auf. Anstelle einer sphärischen Form kann die Werkzeugspitze 16 auch eine sonstige abgerundete Form aufweisen. Diese lässt sich durch einen repräsentativen Durchmesser beschreiben, der als der Durchmesser der am besten passenden Sphäre definiert ist. Die am besten passende Sphäre kann durch einen Least Square Fit innerhalb des abgerundeten Bereichs der Werkzeugspitze 16 ermittelt werden.

Der Spitzenträger 15 ist so im Gehäuse 14 geführt, dass er parallel zur Längsachse 12 des Kopfelements 11 beweglich ist. Um ein Verdrehen des Spitzenträgers 15 zu verhindern, weist er eine Verdrehsicherung 17 auf. Die Verdrehsicherung 17 kann beispielsweise als ein Vorsprung ausgebildet sein, der in eine nicht figürlich dargestellte Vertiefung im Gehäuse 14 eingreift. Axial neben dem Spitzenträger 15 sind im Gehäuse 14 der Reihe nach ein erstes Axialgleitlager 18, ein elastisches Element 19, ein zweites Axialgleitlager 20 und eine Andruckeinstellschraube 21 angeordnet.

Das elastische Element ist parallel zur Längsachse 12 des Kopfteils 11 vorgespannt und zwischen dem ersten Axialgleitlager 18 und dem zweiten Axialgleitlager 20 drehbar gelagert, so das es nicht zu einer Torsion des elastischen Elements 19 kommt. Über das erste Axialgleitlager 18 wirkt das elastische Element 19 auf den Spitzenträger 15 ein, so dass auf den Spitzenträger 15 und somit auch auf die Werkzeugspitze 16 längs einer Kraftrichtung, die mit der Längsachse 12 des Kopfteils 11 zusammenfällt, eine vom elastischen Element 19 erzeugte Kraft wirkt.

Das erste Axialgleitlager 18 kann beispielsweise durch eine Scheibe oder durch zwei axial benachbarte Scheiben ausgebildet werden, wobei eine der Scheiben fest mit dem Spitzenträger 15 verbunden und insbesondere als ein integraler Bestandteil des Spitzenträgers 15 ausgebildet sein kann und einen größeren Durchmesser als der Spitzenträger 15 aufweist. In Zusammenwirkung mit einer auf der Innenseite des Gehäuses 14 ausgebildeten Schulter 22 kann dadurch ein Herausfallen des Spitzenträgers 15 aus dem Gehäuse 14 verhindert werden. Wenn die genannte Scheibe nicht fest mit dem Spitzenträger 15 verbunden ist, wird durch die Schulter 22 zumindest der Federweg des elastischen Elements 19 begrenzt. In diesem Fall kann der Spitzenträger 15 aus dem Gehäuse 14 herausgezogen werden ohne das elastische Element 19 zu entspannen. Das zweite Axialgleitlager 20 kann ebenfalls durch eine Scheibe oder durch zwei Scheiben ausgebildet werden.

Das zwischen den Axialgleitlagern 18, 20 angeordnete elastische Element 19 kann insbesondere als eine Schraubenfeder mit einem vorzugsweise rechteckigen Drahtquerschnitt ausgebildet sein, d. h. zum Beispiel aus einem Draht mit einem rechteckigen Materialquerschnitt hergestellt sein. Durch die Axialgleitlager 18, 20 wird eine Torsion der Schraubenfeder und eine damit verbundene Variation der Kraft verhindert, mit der die Schraubenfeder gegen den Spitzenträger 15 gepresst wird. Eine Torsion kann beispielsweise durch ein Verdrehen der Andruckeinstellschraube 21 oder durch eine Einfederung des elastischen Elements 19 hervorgerufen werden.

Mit der Andruckeinstellschraube 21 lässt sich die Vorspannung des elastischen Elements 19 variieren. Ein Hineindrehen der Andruckeinstellschraube 21 in das Gehäuse 14 hat eine höhere Vorspannung, ein Herausdrehen eine geringere Vorspannung zur Folge. Das elastische Element 19 weist eine sehr flache elastische Kennlinie auf, die durch einen entsprechend kleine elastische Konstante hervorgerufen wird, so dass sich die Rückstellkraft nur langsam mit der Stauchung des elastischen Elements 19 ändert und bei einer lediglich geringen Bewegung des Spitzenträgers 15 nahezu konstant ist. Dies hat zur Folge, dass die Vorspannung des elastischen Elements 19 durch Verdrehen der Andruckeinstellschraube 21 auch dann sehr feinfühlig kalibriert werden kann, wenn die Andruckeinstellschraube 21 kein feines Gewinde aufweist und somit die Bedienung sehr einfach ist. Außerdem bewirkt eine flache elastische Kennlinie, dass nach dem Zustellen des Werkzeugs 7 zum Wälzlagerring 3 und Aufsetzen der Werkzeugspitze 16 auf der Laufbahn 4 die Werkzeugspitze 16 auch dann mit nahezu konstanter Kraft gegen die Laufbahn 4 gepresst wird, wenn beispielsweise infolge von Toleranzen des Wälzlagerrings 3 und/oder der Bearbeitungsmaschine die Eintauchtiefe des Spitzenträgers 15 in das Gehäuse 14 während der Bearbeitung geringfügig variiert. Es kann beispielsweise vom ersten Kontakt der Werkzeugspitze 16 mit der Laufbahn 4 des Wälzlagerrings 3 bis zur Arbeitsposition ein Andruckweg von 1 mm bis 2 mm vorgesehen werden und eine Toleranz um den dann erreichten Arbeitspunkt von +/- 0,25 mm, wobei in diesem Bereich eine Kraft von beispielsweise 600 N nur um +/-15 N schwankt. Beispielsweise kann ein elastisches Element 19 zum Einsatz kommen, dessen elastische Konstante 60 N/mm beträgt. Generell ist eine elastische Konstante bis maximal etwa 200 N/mm möglich. Vorzugsweise sollte die elastische Konstante maximal 150 N/mm oder besser maximal 100 N/mm betragen. Um dennoch eine ausreichend hohe Vorspannung von beispielsweise wenigstens 200 N zu erzielen, ist eine sehr starke Stauchung des elastischen Elements 19 erforderlich.

Eine hohe Vorspannung des elastischen Elements 19 hat zur Folge, dass beim Aufsetzen der Werkzeugspitze 16 beispielsweise auf die Laufbahn 4 des Wälzlagerrings 3 die Werkzeugspitze 16 schlagartig mit einer Kraft gegen die Laufbahn 4 gepresst wird, welche der Vorspannung entspricht. Um dieses harte Aufsetzen abzumildern und das Schadenspotential des Erstkontakts zu reduzieren, kann in Reihe zum elastischen Element 19 ein nicht figürlich dargestelltes weiteres elastisches Element vorgesehen werden, das eine wesentlich steilere elastische Kennlinie aufweist und nicht oder lediglich minimal vorgespannt ist. Dabei kann beispielsweise durch eine nicht figürlich dargestellte weitere Schulter verhindert werden, dass die Vorspannung des elastischen Elements 19 auf das weitere elastische Element einwirkt. Dies hat dann zur Folge, dass der Anpressdruck der Werkzeugspitze 16 beim Erstkontakt mit der Laufbahn 4 zunächst nahezu gleich Null ist und mit zunehmender Annäherung des Werkzeugs 7 an den Wälzlagerring 3 rasch auf den für die Bearbeitung vorgesehenen Anpressdruck ansteigt. Ein Ausfedern des weiteren elastischen Elements und eine damit verbundenen starke Schwankung des Anpressdrucks kann vermieden werden, indem durch eine weitere Zustellung des Werkzeugs 7 zum Wälzlagerring 3 nach der vollständigen Stauchung des weiteren elastischen Elements der Spitzenträger 15 noch etwas weiter in das Gehäuse 14 gedrückt und dadurch das elastische Element 19 gestaucht wird.

Es kann sich bei dem weiteren elastischen Element beispielsweise um eine relativ weiche Tellerfeder handeln, die zwischen dem Spitzenträger 15 und dem ersten axialen Gleitlager 18 angeordnet ist und im belasteten Zustand durch die Vorspannkraft des elastischen Elements 19 auf elastische Hartlage gedrückt wird. Im unbelasteten Zustand drückt die weiche Tellerfeder den Spitzenträger 15 aus dem Gehäuse 14 heraus, bis sie entspannt ist.

Wie aus den Figuren 1 und 2 hervorgeht, ist die Längsachse 12 des Kopfteils 11 und somit die Richtung der Kraft, mit der die Werkzeugspitze 16 bei der Bearbeitung gegen die Laufbahn 4 gepresst wird, nicht senkrecht zur Laufbahn 4 bzw. nicht parallel zur Oberflächennormalen 13 ausgerichtet. Stattdessen schließt die Längsachse 12 des Kopfteils 11 und somit die Kraftrichtung in einer Vorschubebene, die durch die Oberflächennormale 13 und eine Vorschubrichtung des Werkzeugs 7 aufgespannt wird, einen Winkel α größer als 0° mit der Oberflächennormalen 13 ein. Der Winkel α kann 2 bis 15°, insbesondere 5 bis 10° betragen. Dabei ist die Neigungsrichtung des Kopfteils 11 des Werkzeugs 7 so gewählt, dass das Kopfteil 11 in Vorschubrichtung geneigt ist, d. h. dass die Längsachse 12 des Kopfteils 11 mit der Vorschubrichtung einen Winkel von weniger als 90° einschließt. In Figur 1 verläuft die Vorschubrichtung des links dargestellten Werkzeugs 7 in der Zeichenebene schräg nach oben und des rechts dargestellten Werkzeugs 7 in der Zeichenebene schräg nach unten. Bezogen auf die Umfangsrichtung des Wälzlagerrings 3 ist die Längsachse 12 des Kopfteils 11 senkrecht zur Laufbahn 4 orientiert, d. h. die Längsachse 12 des Kopfteils 11 liegt innerhalb der Vorschubebene. Der Winkel α wird deshalb im Folgenden auch als Nachziehwinkel bezeichnet, da die Werkzeugspitze 16 mit dem Spitzenträger 15 in Vorschubrichtung nachgezogen wird.

Zur Verdeutlichung der Geometrie sind in Figur 1 die Längsachse 12 des Kopfteils 11 und die Oberflächennormale 13 der Laufbahn 4 jeweils in einem Abstand von der derzeitigen Bearbeitungsposition eingezeichnet. Die Vorschubbewegung verläuft in Figur 1 zwischen den beiden axialen Enden des Wälzlagerrings 3 jeweils parallel zur Laufbahn 4 und wird durch eine Überlagerung einer Bewegung in Axialrichtung der Werkstückaufnahme 1 und einer Bewegung in Radialrichtung der Werkstückaufnahme 1 erzeugt. In Figur 2 ist die Vorschubrichtung des Werkzeugs 7 durch einen Pfeil angedeutet.

Durch die vorstehend beschriebene Geometrie wird erreicht, dass die Werkzeugspitze 16 über Oberflächenunebenheiten gleitet und diese flach drückt, ohne mit ihnen verschleißfördernd zu verzahnen und ohne zum Aufschwingen zu neigen. Durch die Vorbearbeitung der Laufbahn 4 erzeugte Bearbeitungsspuren sind im Wesentlichen radial umlaufend, so dass sie bei Bewegung in Vorschubrichtung als Oberflächenunebenheiten in Erscheinung treten. Eine weitere Folge der vorstehend beschriebenen Geometrie besteht darin, dass die Werkzeugspitze 16 hauptsächlich innerhalb eines Verschleißbereichs verschlissen wird, der nicht koaxial zur Längsachse 12 des Kopfteils 11 angeordnet ist. Es besteht somit prinzipiell die Möglichkeit, die Werkzeugspitze 16 neu zu positionieren und die Bearbeitung mit derselben Werkzeugspitze 16 außerhalb des Verschleißbereichs fortzusetzen. Außerdem ermöglicht diese Geometrie eine Bearbeitung der Laufbahn 4 mit dem Werkzeug 7 bis dicht an den Führungsbord 5. Allerdings kann der Nachziehwinkel α nicht beliebig groß gewählt werden, da mit steigendem Nachziehwinkel α die Reibungskräfte zwischen dem Spitzenträger 15 und dem Gehäuse 14 erhöht werden, die Lötung oder sonstige Befestigung der Werkzeugspitze 16 am Spitzenträger 15 zunehmend auf Scherung belastet wird und eine zunehmend höhere Vorspannung des elastischen Elements 19 zur Erzeugung der gleichen Normalkomponente der Andruckkraft benötigt wird, mit der die Werkzeugspitze 16 gegen die Laufbahn 4 gepresst wird. Die bislang beschriebenen Auswirkungen des Nachziehwinkels α wären auch mit einer zur Oberflächennormalen gespiegelten Schrägstellung des Bearbeitungskopfes, d. h. mit einer vorauseilenden Werkzeugspitze 16 erzielbar. Allerdings würde dies bei einer dynamischen Betrachtung, d. h. im Falle einer Vorschubbewegung zu einer starken Schwingungsanregung des Spitzenträgers 15 durch Oberflächenunebenheiten führen. Dies ergäbe wiederum Ungleichmäßigkeiten der Bearbeitung und Lastspitzen und würde letztendlich zu einer erheblichen Reduzierung der Lebensdauer der Werkzeugspitze 16 führen.

Prinzipiell wäre es auch möglich, die Längsachse 12 des Kopfteils 11 auch in Umfangsrichtung des Wälzlagerrings 3 zu neigen, da in dieser Richtung durch die Rotation des Wälzlagers 3 während der Bearbeitung ebenfalls eine Bewegung stattfindet. Wegen der sehr hohen Bewegungsgeschwindigkeit des Wälzlagerrings 3 in Umfangsrichtung, die um ein Vielfaches höher ist als die Vorschubgeschwindigkeit des Werkzeugs 7, resultiert aus der Umfangsbewegung allerdings ohnehin keine nennenswerte Schwingungsanregung. Hinzu kommt noch, dass die Laufbahn 4 des Wälzlagerrings 3 hauptsächlich Bearbeitungsspuren, beispielsweise durch Schleifen oder Drehen, aufweist, die in Umfangsrichtung verlaufen. Eine Bewegung in Umfangsrichtung erfolgt somit im Wesentlichen parallel zu den Bearbeitungsspuren. Eine Bewegung in Vorschubrichtung erfolg dagegen quer zur Umfangsrichtung und somit auch quer zu den Bearbeitungsspuren und ist daher mit einer starken Schwingungsanregung verbunden. Aus diesem Grund ist die Neigung der Längsachse 12 des Kopfteils 11 in Vorschubrichtung erforderlich. Eine Neigung der Längsachse 12 des Kopfteils 11 in Umfangsrichtung ist nicht erforderlich, wirkt sich aber auch nicht negativ aus. Hierfür kommen insbesondere die gleichen Winkelbereiche in Betracht, wie für die Vorschubrichtung beschrieben.

Eine weitere Maßnahme zur Reduzierung des Verschleißes besteht darin, die Bearbeitungsmaschine mit einer nicht figürlich dargestellten Einrichtung auszustatten, die ein Kühl- und/oder Schmiermedium in den Bereich des Kontaktes zwischen der Werkzeugspitze 16 und der Laufbahn 4 fördert. Der Förderdruck kann bei etwa 20 bar und mehr liegen. Dadurch kann eine mindestens teilweise Trennung zwischen Werkzeugspitze 16 und Laufbahn 4 in Form von Aufschwimmen erzeugt werden. Dazu muss die Werkzeugspitze 16 aus der Hauptfahrtrichtung, die aus der Rotation der Werkstückaufnahme 1 resultiert und aus der Nebenfahrtrichtung, die aus dem Vorschub des Werkzeugs 7 resultiert, mit einem geschlossenen und blasenfreien sowie möglichst dicken und druckfesten Medienfilm auf der Laufbahn 4 bzw. der Anlauffläche 6 des Wälzlagerrings 3 angeströmt werden. Die Fliessrichtung des Medienfilmes muss so sein, dass die von der Werkzeugspitze 16 erzeugte Störung und Verwirbelung, welche gleichzeitig einen Unterdruckbereich darstellt, entgegen der Fahrtrichtung auftritt. Dem verwendeten Medium, üblicherweise ein wasserbasierendes Kühl- und/oder Schmiermedium, können im Ölanteil Zusätze beigegeben werden, welche die Druckstabilität des Mediums erhöhen. Der Wasseranteil muss dennoch überwiegen, um eine optimale Wärmeabfuhr von der Werkzeugspitze 16 zu garantieren.

Für eine optimale Anströmung der Werkzeugspitze 16 kann es sinnvoll sein, eine in das Werkzeug 7 integrierte Durchführung für das Kühl- und/oder Schmiermedium zu wählen, welche maschinenseits über die Werkzeugaufnahme 8 gespeist wird und das Medium über das Werkzeug 7 in die gewünschte Position relativ zur Werkzeugspitze 16 leitet. Zum Erreichen eines ausreichenden Medienfilmes auf dem Werkstück können mehrere Medienstrahlaustritte notwendig werden.

Mit dem vorstehend beschriebenen Werkzeug 7 lässt sich in Kombination mit einer geeigneten Kühl- und/oder Schmiereinrichtung für den Fall einer lediglich geschliffenen und nicht gehonten Oberfläche ein Gleitweg der Werkzeugspitze 16 auf dem Wälzlagerring 3 von etwa 100 km bis zum Ausprägen einer Abplattung der Werkzeugspitze16 erreichen, die sich in nicht mehr vertretbarer Weise auf die Ausbildung der Druckeigenspannungen auswirkt. Danach muss ein anderer Bereich der Werkzeugspitze 16 für den Kontakt mit der Laufbahn 4 bzw. der Anlauffläche 6 ausgewählt werden oder die Werkzeugspitze 16 muss ausgewechselt werden. Ein Wechsel der Werkzeugspitze 16 ist dann mit einem vergleichsweise geringen Aufwand möglich, wenn beim Wechsel die Vorspannung des elastischen Elements 19 erhalten bleibt. Beim Wechsel der Werkzeugspitze 16 wird das Kopfteil 11 des Werkzeugs 7 nicht zerlegt und das elastische Element 19 nicht entspannt. Somit ist ein erneutes Kalibrieren der Vorspannung des elastischen Elements 19 nach dem Wechsel der Werkzeugspitze 16 entbehrlich. Dies ist beispielsweise dann möglich, wenn der Spitzenträger 15 nicht fest mit dem ersten Axialgleitlager 18 verbunden ist und aus dem Gehäuse 14 herausgezogen werden kann. In diesem Fall empfiehlt sich eine Verliersicherung, die ein unbeabsichtigtes Herausfallen des Spitzenträgers 15 aus dem Gehäuse 14 verhindert.

Die Bearbeitungsmaschine ist so ausgelegt, dass sie den Wälzlagerring 3 so in Rotation versetzt, dass dessen Laufbahn 4 bzw. dessen Anlauffläche 6 relativ zur Werkzeugspitze 16 eine Geschwindigkeit von beispielsweise zwischen 50 m/min und 150 m/min, bevorzugt 120 m/min, aufweist. Der Vorschub des Werkzeugs 7 erfolgt quer zur Umfangsrichtung des Wälzlagerrings 3 und kann beispielsweise von 0,05 mm/Umdrehung bis 0,15 mm/Umdrehung betragen. Dabei wird jeweils auf die Rotation des Wälzlagerrings 3 Bezug genommen. Für die Andruckkraft, mit der die Werkzeugspitze 16 gegen die Laufbahn 4 oder gegen die Anlauffläche 6 des Wälzlagerrings 3 gepresst wird, können beispielsweise Werte zwischen 250 und 750 N zur Anwendung kommen, wenn als Werkzeugspitze 16 eine Diamanthalbkugel mit einem Durchmesser von 6 mm verwendet wird. Durch die Bearbeitung mit der Werkzeugspitze 16 kann die Rauheit der bereits zuvor feinbearbeiteten Laufbahn 4 oder Anlauffläche 6 des Wälzlagerrings 3 Fläche von beispielsweise Ra 0,45 auf Ra 0,15 oder von Ra 0,30 auf Ra 0,05 gesenkt werden.

Mit der Bearbeitungsmaschine können im Wälzlagerring 3 Druckeigenspannungen von bis zu 1000 MPa erzeugt werden bis in 500 Mikrometer Tiefe mit einem Maximum bei 100 bis 200 Mikrometer Tiefe. Die Tiefe wird dabei ab der Oberfläche des Wälzlagerrings 3 gerechnet. Je größer der Durchmesser der Werkzeugspitze 16 ist, desto größer ist die erreichbare Tiefe. Je größer die verwendete Andruckkraft ist, desto größere Druckeigenspannungen können erzeugt werden. Höhere Werte als 1000 MPa sind zwar erreichbar, aber der Produktlebensdauer nicht zuträglich.

Um ein präzises Aufsetzen der Werkzeugspitze 16 auf der Laufbahn 4 oder der Anlauffläche 6 des Wälzlagerrings 3 zu ermöglichen, kann zum jeweils erstmaligen Einrichten der Bearbeitungsmaschine auf eine Ausführungsform des Wälzlagerrings 3 eine Laserzielvorrichtung zur Markierung einer Stelle der Laufbahn 4 oder der Anlauffläche 6 des Wälzlagerrings 3 vorgesehen sein, an der die Werkzeugspitze 16 zur Anlage kommt. Auf Basis der so ermittelten Position kann eine Justage des Werkzeugs 7 durchgeführt werden, die für die Bearbeitung weiterer Wälzlagerringe 3 der gleichen Ausführungsform beibehalten werden kann. Die Laserzielvorrichtung kann insbesondere am Kopfteil 11 des Werkzeugs 7 angebracht sein.

Mit dem Werkzeug 7 kann die Laufbahn 4 oder die Anlauffläche 6 des Wälzlagers 3 bearbeitet werden. Wie in Figur 1 dargestellt werden hierzu zwei Werkzeuge 7 so positioniert, dass ihre Werkzeugspitzen 16 an zueinander entgegensetzten axialen Endbereichen der Laufbahn 4 auf zueinander diametral gegenüberliegenden Seiten des Wälzlagerrings 3 zur Anlage kommen. Die Werkzeuge 7 werden über den ersten Kontakt der Werkzeugspitzen 16 mit der Laufbahn 4 dem Wälzlagerring 3 hinaus jeweils noch etwas stärker angenähert, so dass der Spitzenträger 15 jeweils ca. 1 mm bis 2 mm in das Gehäuse 14 einfedert und dabei das elastische Element 19 entsprechend staucht. Durch die vom elastischen Element 19 erzeugte Rückstellkraft wird die jeweilige Werkzeugspitze 16 gegen die Laufbahn 4 des Wälzlagerrings 3 gepresst. Infolge der starken Vorspannung ist der Anpressdruck, mit dem die Werkzeugspitze 16 gegen die Laufbahn 4 gepresst wird, um ein Vielfaches höher als dies der durch die Zustellbewegung erzeugten Rückstellkraft des entspannten elastischen Elements 19 entsprechen würde.

Zur Bearbeitung der Laufbahn 4 des Wälzlagerrings 3 wird der Wälzlagerring 3 mit dem Anlaufbord 5 voran koaxial zur Drehachse 2 der Werkstückaufnahme 1 positioniert, so dass der Anlaufbord 5 des Wälzlagerrings 3 benachbart zur Werkstückaufnahme 1 angeordnet ist. In dieser Stellung wird der Wälzlagerring 3 an der Werkstückaufnahme 1 fixiert. Die Fixierung kann beispielsweise mittels nicht figürlich dargestellter Spannbacken und/oder magnetisch erfolgen. Die Spannbacken können insbesondere am Innenumfang des Wälzlagerrings angreifen.

Nach der Fixierung des Wälzlagerrings 3 wird die Werkstückaufnahme 1 und somit auch der Wälzlagerring 3 in Rotation versetzt. Die Rotationsgeschwindigkeit kann beispielsweise so gewählt werden, dass sich auf der Laufbahn 4 des Wälzlagerrings 3 ein arithmetischer Mittelwert der Bahngeschwindigkeit von 120 m/min ergibt. Anschließend werden die Werkzeuge 7 der Laufbahn 4 des Wälzlagerrings 3 genähert, so dass deren Werkzeugspitzen 16 berührend an der Laufbahn 4 zur Anlage kommen. Nach der ersten Berührung zwischen den Werkzeugspitzen 16 und der Laufbahn 4 werden die Werkzeuge 7 der Laufbahn 4 nochmals weiter angenähert, so dass die Spitzenträger 15 beispielsweise um 1 mm bis 2 mm tiefer in die Gehäuse 14 eintauchen und dabei zunächst die vorgeschalteten weiteren elastischen Elemente zum Druckaufbau bei Null beginnend und danach die elastischen Elemente 19 um insgesamt die gleiche Strecke stauchen. Wegen der flachen elastischen Kennlinie erhöht sich die Rückstellkraft und damit die Andruckkraft der jeweiligen Werkzeugspitze 16 gegen die Laufbahn 4 durch das weitere Eintauchen des Spitzenträgers 15 in das Gehäuse 14 jeweils nur geringfügig. Der Aufbau der Andruckkraft im Rahmen der vorstehend beschriebenen mechanischen Kontaktierung der Laufbahn 4 durch die Werkzeugspitzen 16 wird nach Möglichkeit auf wenigstens 10 Umdrehungen des Wälzlagerrings 3 verteilt, um die Gefahr einer Beschädigung der Werkzeugspitzen 16 oder der Laufbahn 4 möglichst gering zu halten. Eine Beschädigung der Laufbahn 4 kann mechanisch durch ein entstehendes geometrisches Rändchen erfolgen, aber auch durch einen zu hohen Gradienten der erzeugten Druckeigenspannungen.

Wie aus Figur 1 ersichtlich werden die Werkzeugspitzen 16 der beiden Werkzeuge 7 bezüglich der Drehachse 2 der Werkstückaufnahme 1 auf diametral gegenüberliegenden Seiten auf die Laufbahn 4 aufgesetzt. Mit anderen Worten, die Kontaktzonen der Werkzeugspitzen 16 der beiden Werkzeuge 7 mit der Laufbahn 4 sind in Umfangsrichtung des Wälzlagerrings 3 zueinander um 180° versetzt. Diese Geometrie hat zur Folge, dass sich die durch die Werkzeugspitzen 16 auf den Wälzlagerring 3 ausgeübten Kräfte ungefähr kompensieren und somit nicht zu einem Ablösen des Wälzlagerrings 3 von der Werkstückaufnahme 1 führen.

Weiterhin werden die Werkzeugspitzen 16 der beiden Werkzeuge 7 in zueinander entgegengesetzten axialen Endbereichen auf die Laufbahn 4 aufgesetzt. Bei dem in Figur 1 dargestellten Ausführungsbeispiel wird die Werkzeugspitze 16 des einen Werkzeugs 7 im Bereich des minimalen Durchmessers oder benachbart zum minimalen Durchmesser der Laufbahn 4 auf die Laufbahn 4 aufgesetzt. Die Werkzeugspitze 16 des anderen Werkzeugs 7 wird im Bereich des maximalen Durchmessers oder benachbart zum maximalen Durchmesser der Laufbahn 4 auf die Laufbahn 4 aufgesetzt.

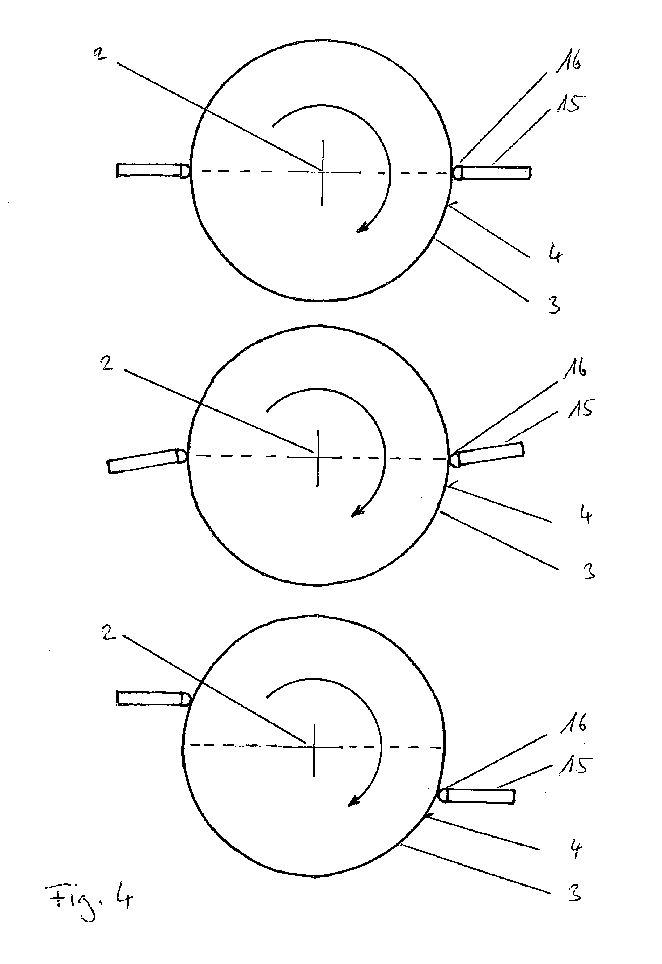

Infolge der Vorspannung der elastischen Elemente 19 werden die Werkzeugspitzen 16 der beiden Werkzeuge 7 jeweils bereits unmittelbar nach dem Aufsetzen auf die Laufbahn 4 des Wälzlagerrings 3 mit der vollen, für die Bearbeitung vorgesehenen Andruckkraft gegen die Laufbahn 4 gepresst. Es käme somit ohne weitere Maßnahmen zu einem harten Aufsetzen der Werkzeugspitzen 16 auf die Laufbahn 4, so dass das Risiko einer lokalen Beschädigung der Laufbahn 4 besteht. Dieses Risiko kann dadurch reduziert werden, dass dem elastischen Element 19 ein weiteres elastisches Element vorgeschaltet wird, das eine deutlich steilere elastische Kennlinie als das elastische Element 19 aufweist und nicht oder nur geringfügig vorgespannt ist. Alternativ oder zusätzlich besteht die Möglichkeit, die Werkzeugspitzen 16 jeweils in einem Bereich auf die Laufbahn 4 aufzusetzen, in dem eine Beschädigung die Funktionsweise des Wälzlagerrings 3 nicht in unzulässiger Weise beeinträchtigt. Diese Bedingung ist in der Regel in den axialen Endbereichen der Laufbahn 4 erfüllt, da es dort bei einem Wälzlager mit dem erfindungsgemäßen Wälzlagerring 3 beispielsweise infolge der Kantenkürzung der Wälzkörper und ggf. einer zusätzlichen Krümmung der Mantelflächen der Wälzkörper nicht zu einem Kontakt zwischen den Wälzkörpern und der Laufbahn 4 kommt bzw. im Falle eines Kontakts nur sehr geringe Belastungen auftreten. Näheres hierzu wird anhand von Figur 4 erläutert.

Nach dem Aufsetzen der Werkzeugspitzen 16 auf die Laufbahn 4 werden die beiden Werkzeuge 7 axial aufeinander zu bewegt. Dies wird dadurch erreicht, dass die Vorschubbewegungen der beiden Werkzeuge 7 während der Bearbeitung des Wälzlagerrings 3 bezogen auf die Laufbahn 4 zueinender gegenläufig sind. Die Vorschubbewegungen betragen jeweils beispielsweise 0,10 mm/Umdrehung. Dabei sind die Längsachsen 12 der Spitzenträger 11 jeweils um die bereits genannten Nachziehwinkel α in Vorschubrichtung der beiden Werkzeuge 7 geneigt. Obwohl die Rotation des Wälzlagerrings 3 eine erheblich höhere relative Bewegung zwischen den Werkzeugspitzen 16 und der Laufbahn 4 zur Folge hat als die Vorschubbewegung der Werkzeuge 7, und eine Neigung der Längsachsen 12 der Kopfteile 11 der beiden Werkzeuge 7 in Umfangsrichtung des Wälzlagerrings 7 auf den ersten Blick geboten erscheint, ist eine solche Neigung aus den bereits erwähnten Gründen nicht erforderlich.

Infolge der bzgl. der Laufbahn 4 des Wälzlagerrings 3 gegenläufigen Vorschubrichtungen kommt es in der axialen Mitte der Laufbahn 4 zu einer Begegnung der beiden Werkzeuge 7, bei der die Werkzeugspitzen 16 der beiden Werkzeuge 7 die gleiche axiale Position aufweisen. Da die beiden Werkzeuge 16 bezüglich der Drehachse 2 der Werkstückaufnahme 1 auf diametral gegenüberliegenden Seiten angeordnet sind, blockieren sich die Werkzeuge 7 trotz der Begegnung nicht. Die Vorschubrichtungen der beiden Werkzeuge 7 werden auch nach der Begegnung beibehalten, bis die Werkzeugspitzen 16 das jeweils bezogen auf ihre Startposition entgegengesetzte axiale Ende der Laufbahn 4 nahezu erreicht haben. Dann werden die Werkzeugspitzen 16 von der Laufbahn 4 abgehoben. Idealerweise beginnt das Abheben mit einem kontinuierlichen Abbau der Andruckkraft über wenigstens 10 Umdrehungen. Keinesfalls werden die Werkzeugspitzen 16 in berührendem Kontakt mit dem Wälzlagerring 3 über die axialen Enden der Laufbahn 4 hinaus geführt, da dies zu einer schwerwiegenden Beschädigung der Werkzeugspitzen 16 führen kann. An dem einen axialen Ende der Laufbahn 4 droht eine Kollision mit dem Anlaufbord 5, an dem anderen axialen Ende der Laufbahn 4 droht ein Kontakt mit der dort ausgebildeten Kante.

Ab der Begegnung der beiden Werkzeuge 7 bewegen sich deren Werkzeugspitzen 16 jeweils über einen Bereich der Laufbahn 4, der bereits mit der jeweils anderen Werkzeugspitze 16 bearbeitet wurde. Allerdings erstreckt sich dieser Bereich nicht ganz bis zu den axialen Startpositionen der Bearbeitung, da dies der Anlaufbord 5 in Verbindung mit der Neigung des Kopfteils 11 des Werkzeugs 7 in der Regel nicht zulässt und da ein Sicherheitsabstand zur Kante neben der Laufbahn 4 eingehalten wird.

Die doppelte Bearbeitung erstreckt sich jedoch immer über den gesamten Bereich, welcher im Betriebszustand des Wälzlagers zur maßgeblichen Lastübertragung zwischen den Wälzkörpern und dem Wälzlagerring genutzt wird.

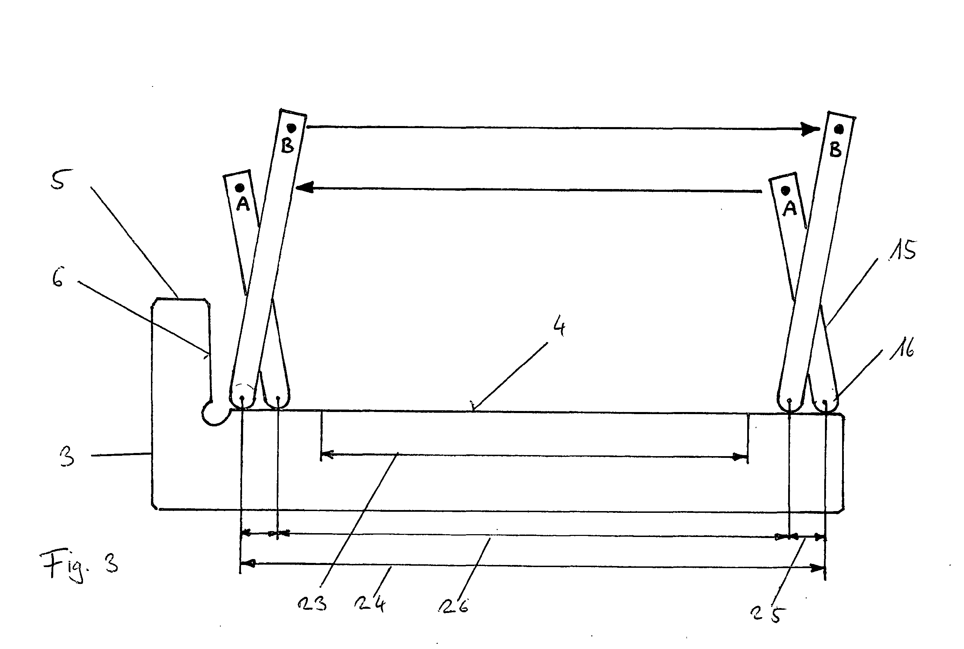

Einige Aspekte bei der Bearbeitung der Laufbahn 4 des Wälzlagerrings 3 werden anhand von Figur 3 näher erläutert.

Figur 3 zeigt den Beginn und das Ende der Bearbeitung des Wälzlagerrings 3 in einer stark abstrahierten Darstellung. Aus Gründen der Übersichtlichkeit sind die Werkzeuge 7 nicht vollständig dargestellt. Neben einer Teilansicht des Wälzlagerrings 3 sind die Spitzenträger 15 und die Werkzeugspitzen 16 der beiden Werkzeuge 7 jeweils in ihrer Startposition zu Beginn der Bearbeitung als auch in ihrer Endposition am Ende der Bearbeitung dargestellt. Tatsächlich weist jedes Werkzeug 7 nur einen Spitzenträger 15 und eine Werkzeugspitze 16 auf, es sind aber zwei Zeitpunkte der Bearbeitung und somit zwei verschiedene Positionen der Spitzenträger 15 und Werkzeugspitzen 16 in derselben Figur gemeinsam dargestellt. Die Zuordnung der Start- und Endpositionen zum jeweiligen Spitzenträger 15 ist aus den Buchstaben ersichtlich, mit denen die Spitzenträger versehen sind. Die Übergänge von den Start- zu den Endpositionen sind durch Pfeile angedeutet. Um einen Vergleich der Verhältnisse bei den beiden Werkzeugen 7 zu erleichtern, sind die Werkzeugspitzen 16 der beiden Werkzeuge 7 in der gleichen Umfangsposition des Wälzlagerrings 3 dargestellt.

Der Wälzlagerring 3 wird beim Betrieb in einem Wälzlager durch die abrollenden Wälzkörper nicht über die gesamte axiale Erstreckung seiner Laufbahn 4 gleichmäßig belastet. Stattdessen kann beispielsweise infolge der Geometrie der Wälzkörper und/oder der Laufbahn 4 eine Hauptbelastungszone 23 ausgebildet sein, innerhalb der die Laufbahn 4 besonders stark belastet wird. Die Haubelastungszone 23 erstreckt sich in der Regel beidseits von der axialen Mitte der Laufbahn 4 jeweils über einen axialen Teilbereich in Richtung zu den axialen Enden der Laufbahn 4. Beispielsweise wegen Kantenkürzungen oder einer vorgesehenen nach außen hin entlastend wirkenden Krümmung des Laufbahn- und/oder Wälzkörperprofils liegen die axialen Endbereiche der Laufbahn 4 außerhalb der Hauptbelastungszone 23. Eine quantitative Definition der Hauptbelastungszone 23 kann über ein Lastverhältnis angegeben werden, welches im Betriebszustand der maximal zulässigen Belastung des Wälzlagerrings 3 das Verhältnis aus der an der jeweiligen Position auftretenden Last zu der auf der Laufbahn 4 maximal auftretenden Last angibt. Alle Bereiche der Laufbahn 4, innerhalb derer das Lastverhältnis überall oberhalb eines vorgegebenen Mindestwerts liegen, werden der Hauptbelastungszone 23 zugerechnet. Der Mindestwert für das Lastverhältnis kann beispielsweise 0,5 oder restriktiver 0,8 betragen.

Abhängig von der jeweils durchgeführten Bearbeitung kann die Laufbahn in einen Bearbeitungsbereich 24, zwei Einfachbearbeitungsbereiche 25 und einen Doppelbearbeitungsbereich 26 unterteilt werden. Die beiden Einfachbearbeitungsbereiche 25 sind in der Nähe der axialen Enden der Laufbahn 4 angeordnet und schließen den Doppelbearbeitungsbereich 26 axial ein. Die gesamte axiale Erstreckung der beiden Einfachbearbeitungsbereiche 25 und des Doppelbearbeitungsbereichs 26 ergibt den Bearbeitungsbereich 24. In den beiden Einfachbearbeitungsbereichen 25 wird je eine der beiden Werkzeugspitzen 16 aufgesetzt und dann auf den jeweils anderen Einfachbearbeitungsbereich 25 zu bewegt. Allerdings dringt die jeweilige Werkzeugspitze 16 nicht bis in den jeweils anderen Einfachbearbeitungsbereich 25 vor, sondern wird vorher von der Laufbahn 4 abgehoben. Der Doppelbearbeitungsbereich 26 wird mit beiden Werkzeugspitzen 16 bearbeitet und es findet im Ergebnis eine zweifache Bearbeitung der Laufbahn 4 innerhalb des Doppelbearbeitungsbereichs 26 statt.

Da eine sorgfältige Bearbeitung der Laufbahn 4 insbesondere innerhalb des Hauptbelastungsbereichs 23 erforderlich ist, wird die Bearbeitung so gestaltet, dass der Doppelbearbeitungsbereich 26 die Hauptbelastungszone 23 der Laufbahn 4 vollständig einschließt.

Nach der Bearbeitung mit den beiden Werkzeugen 7 kann, wenn die Bearbeitung lediglich auf die Erzeugung von Druckeigenspannungen abzielt, die Laufbahn 4 des Wälzlagerrings 3 gehont werden. Hierdurch kann die Rauheit auf ein anderes als das durch die Bearbeitung erreichtes Niveau verändert werden und insbesondere können unerwünschte Bearbeitungsspuren entfernt werden. Solche Bearbeitungsspuren sind insbesondere kleine Kratzer oder kleinste Ausbrüche, die durch Einziehen von harten Partikeln zwischen die Werkzeugspitze 16 und die Laufbahn 4 entstehen können. Da dabei nur ein sehr geringer Materialabtrag erfolgt, ändert sich die Verteilung der Druckeigenspannungen nur unwesentlich. Statt Honen können auch andere Verfahren mit geringem Materialabtrag, wie beispielsweise Gleitschleifen, zum Einsatz kommen.

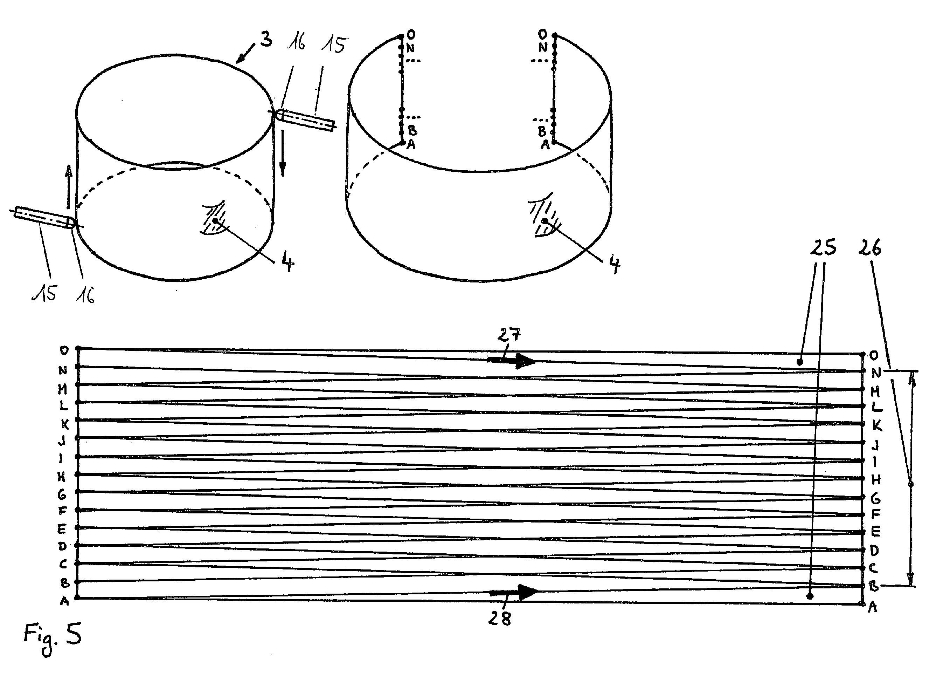

Figur 4 zeigt eine schematische Darstellung dreier Varianten der Positionierung und Winkelausrichtung der beiden Werkzeuge 7 relativ zum Wälzlagerring 3. Dargestellt sind jeweils die Laufbahn 4 und die beiden Spitzenträger 15 mit den Werkzeugspitzen 16. Die Vorschubebene verläuft jeweils senkrecht zur Zeichenebene, so dass die Neigung der Spitzenträger 15 in der Vorschubebene in Figur 5 nicht sichtbar ist. Dennoch ist bei allen drei Varianten die zuvor beschriebene Neigung der Längsachsen 12 der Kopfteile 11 und somit der Spitzenträger 15 in der Vorschubebene vorhanden.

Bei der in Figur 4 oben dargestellten Variante ist keine weitere Neigung der Spitzenträger 15 vorgesehen, so dass diese bezogen auf die Umfangsrichtung des Wälzlagerrings 3 senkrecht zur Laufbahn 4 orientiert sind.

Bei der in Figur 4 in der Mitte dargestellten Variante sind die Spitzenträger 15 entgegen der Drehrichtung des Wälzlagerrings 3 geneigt, so dass sich in Umfangsrichtung eine nachziehende Bewegung der Spitzenträger 15 mit den Werkzeugspitzen 16 ergibt.

Bei der in Figur 4 unten dargestellten Variante sind die Spitzenträger 15 analog zu der in der Mitte dargestellten Variante entgegen der Drehrichtung des Wälzlagerrings 3 geneigt, so dass sich in Umfangsrichtung eine nachziehende Bewegung der Spitzenträger 15 mit den Werkzeugspitzen 16 ergibt. Die Geometrie der in der Mitte und der unten dargestellten Variante ist sehr ähnlich. Bei der unten dargestellten Variante kommt die Neigung der Spitzenträger 15 entgegen der Drehrichtung des Wälzlagerrings 3 allerdings nicht durch ein entsprechendes Schwenken der Spitzenträger 15, sondern durch ein lineares Verschieben der Spitzenträger 15 ohne eine Winkelbewegung zustande. Die unten dargestellte Variante kommt somit insbesondere dann zum Einsatz, wenn die Spitzenträger 15 entgegen der Drehrichtung des Wälzlagerrings 3 geneigt werden sollen, hierfür aber kein Schwenkmechanismus vorhanden ist. Zudem ermöglicht die untere Variante eine sehr präzise Einstellung des Neigungswinkels der Spitzenträger 15 relativ zum Wälzlagerring 3 durch Ablesen einer linearen Skala beim Verschieben der Spitzenträger 15.

Figur 5 zeigt eine stark vergrößerte und idealisierte Darstellung eines Musters von Bahnkurven 27, 28, die von den Werkzeugspitzen 16 der beiden Werkzeuge 7 bei der Bearbeitung auf der Laufbahn 4 des Wälzlagerrings 3 ausgebildet werden. Aus Gründen der Anschaulichkeit ist in Figur 5 oben links weiterhin die Bearbeitungssituation schematisch eingezeichnet. Die Bahnkurven 27, 28 sind auf einer Abwicklung der Laufbahn 4 dargestellt, wobei zur Erleichterung der Darstellung eine zylinderförmige Laufbahn 4 gewählt wurde. Der Zusammenhang zwischen der abgewickelt dargestellten Laufbahn 4 und der Geometrie der Laufbahn 4 auf dem Wälzlagerring 3 wird durch eine oberhalb des Bahnkurvenmusters abgebildeten teilweisen Abwicklung der Laufbahn 4 verdeutlicht. Die Punkte der Bahnkurven 27, 28 an den beiden Enden der abgewickelten Laufbahn 4 sind mit Buchstaben A bis O bezeichnet, wobei jeweils gleiche Buchstaben für Punktepaare verwendet werde, die in der nichtabgewickelten Darstellung unmittelbar benachbart sind. Die gleiche Kennzeichnung wurde auch bei der teilweise abgewickelten Laufbahn 4 verwendet.

Die eingezeichneten Pfeile geben jeweils die Bewegungsrichtung der jeweiligen Werkzeugspitze 16 relativ zur Laufbahn 4 an. Um die Charakteristika der Bahnkurven 27, 28 deutlicher sichtbar zu machen, sind die Bahnkurven 27, 28 stark verzerrt dargestellt. In Vorschubrichtung der Werkzeuge 7 sind die Bahnkurven 27, 28 stark gestreckt und in Umfangsrichtung des Wälzlagerrings 3 stark gestaucht dargestellt. Außerdem beruht die Darstellung auf exakt gleichen Vorschubgeschwindigkeiten der beiden Werkzeuge 7 und auf einer exakt konstanten Rotationsgeschwindigkeit des Wälzlagerrings 3.

Im oberen und im unteren Teil des Bahnkurvenmusters der Figur 6 sind die in Figur 4 näher definierten Einfachbearbeitungsbereiche 25 dargestellt. Im oben dargestellten Einfachbearbeitungsbereich 25 ist ausschließlich die erste Bahnkurve 27 vorhanden, da die Laufbahn 4 dort ausschließlich von einem der beiden Werkzeuge 7 bearbeitet wird. Im unten dargestellten Einfachbearbeitungsbereich 25 ist ausschließlich die zweite Bahnkurve 28 vorhanden, da die Laufbahn 4 dort ausschließlich vom anderen Werkzeuge 7 bearbeitet wird. Im Zweifachbearbeitungsbereich 26, der zwischen den beiden Einfachbearbeitungsbereichen 25 angeordnet ist, wird die Laufbahn 4 von beiden Werkzeugen 7 bearbeitet. Folglich sind im Zweifachbearbeitungsbereich 26 sowohl die erste Bahnkurve 27 als auch die zweite Bahnkurve 28 vorhanden. Beide Bahnkurven 27, 28 haben infolge der Überlagerung der Vorschubbewegung der Werkzeuge 7 und der Rotationsbewegung des Wälzlagerrings 3 jeweils die Form einer Schraubenlinie, allerdings mit zueinender entgegengesetztem Drehsinn. Da die beiden Werkzeuge 7 die Bearbeitung von entgegengesetzten axialen Enden der Laufbahn 4 starten und in der Nähe des jeweils anderen axialen Endes beenden, kreuzen sich die erste Bahnkurve 27 und die zweite Bahnkurve 28 im Zweifachbearbeitungsbereich 26 bei jeder Umdrehung des Wälzlagerrings 3 zweimal. In der idealisierten Darstellung der Figur 6 liegen die Kreuzungspunkte alle bei zwei festen Umfangspositionen. Tatsächlich können die Umfangspositionen der Kreuzungspunkte jedoch infolge der endlichen Genauigkeit bei der Bearbeitung variieren.

Da die Werkzeugspitzen 16 der beiden Werkzeuge 7 entlang der Bahnkurven 27, 28 gegen die Laufbahn 4 des Wälzlagerrings 3 gepresst werden, wird die Laufbahn 4 entlang der Bahnkurven 27, 28 bei geringen Andruckkräften geglättet und leicht eingedrückt, so dass ein dem Muster der Bahnkurven 27, 28 entsprechendes Rillenmuster auf der Laufbahn 4 des Wälzlagerrings 3 erzeugt wird. Außerdem werden bei höheren Andruckkräften durch das Anpressen der Werkzeugspitzen 6 gegen die Laufbahn 4 lokal Druckeigenspannungen im Material des Wälzlagerrings 3 erzeugt, die eine definierte Größe und einen definierten Tiefenverlauf aufweisen. Somit wird bei der Bearbeitung des Wälzlagerrings 3 ein dem Muster der Bahnkurven 27, 28 und dem Rillenmuster entsprechendes Muster von Druckeigenspannungen ausgebildet.

Durch die Druckeigenspannungen kann eine Ausbildung und eine Vergrößerung von Rissen im Bereich der Laufbahn 4 des Wälzlagerrings 3 gehemmt werden und dadurch eine Beschädigung des Wälzlagerrings 3 verhindert oder zumindest zeitlich verzögert werden. Dadurch verlängert sich die Lebensdauer des Wälzlagerrings 3 und somit auch des Wälzlagers, in das der Wälzlagerring eingebaut ist. Das Kreuzmuster der Bahnkurven 27, 28, das eine entsprechende Geometrie bzgl. des Verlaufs der Druckeigenspannungen erzeugt, hat zur Folge, dass keine Linie existiert, entlang der die Druckeigenspannungen konstant sind. Stattdessen variieren die Druckeigenspannungen ortsabhängig, so dass es keine ausgeprägten Vorzugsrichtungen beispielsweise für eine Rissbildung gibt.

Demgegenüber wird die Anlauffläche 6 aus Platzgründen lediglich mit einem Werkzeug 7 bearbeitet. Das Werkzeug 7 wird so angeordnet, dass die Werkzeugspitze 16 im radial inneren Endbereich der Anlauffläche 6 gegen die Anlauffläche 6 gepresst wird und radial nach außen über die Anlauffläche 6 geführt wird. Dabei ist der Spitzenträger 15 in analoger Weise wie für die Bearbeitung der Laufbahn 4 beschrieben in Vorschubrichtung des Werkzeugs 7 geneigt. Durch diese Bearbeitung der Anlauffläche 6 wird auf der Anlauffläche 6 eine Bahnkurve erzeugt, die die Form einer Spirale aufweist.

### Bezugszeichenliste

- 1: Werkstückaufnahme
- 2: Drehachse
- 3: Wälzlagerring
- 4: Laufbahn
- 5: Anlaufbord
- 6: Anlauffläche
- 7: Werkzeug
- 8: Werkzeugaufnahme
- 9: Anschlussstück
- 10: Schwenkvorrichtung
- 11: Kopfteil
- 12: Längsachse
- 13: Oberflächennormale
- 14: Gehäuse
- 15: Spitzenträger
- 16: Werkzeugspitze
- 17: Verdrehsicherung
- 18: Erstes Axialgleitlager
- 19: Elastisches Element
- 20: Zweites Axialgleitlager
- 21: Andruckeinstellschraube
- 22: Schulter
- 23: Belastungsbereich
- 24: Bearbeitungsbereich
- 25: Einfachbearbeitungsbereich
- 26: Doppelbearbeitungsbereich
- 27: Erste Bahnkurve
- 28: Zweite Bahnkurve

## Patentansprüche

1. Verfahren zum spanlosen Bearbeiten eines Oberflächenbereichs (4, 6) eines Wälzlagerrings (3), wobei
- der Wälzlagerring (3) relativ zu zwei Werkzeugen (7), die je eine Werkzeugspitze (16) aufweisen, in Rotation versetzt wird,
- die Werkzeugspitzen (16) der beiden Werkzeuge (7) ausgehend von verschiedenen Startpositionen in bezüglich des Oberflächenbereichs (4, 6) des rotierenden Wälzlagerrings (3) zueinander gegenläufiger Bewegung über den Oberflächenbereich (4, 6) geführt und dabei mit einer Andruckkraft gegen den Oberflächenbereich (4, 6) gepresst werden, so dass auf dem Oberflächenbereich (4, 6) von jeder Werkzeugspitze (16) eine schraubenlinienförmige oder eine spiralförmige Bahnkurve (27, 28) derart ausgebildet wird, dass sich die Bahnkurven (27, 28) bereichsweise überlappen und im Überlappungsbereich (26) einander vielfach kreuzen.

2. Verfahren nach Anspruch 1, wobei die Werkzeugspitzen (16) der beiden Werkzeuge (7) ausgehend von Startpositionen, die bezogen auf die Rotation des Wälzlagerrings (3) um 180° zueinander versetzt sind, über den Oberflächenbereich (4, 6) geführt werden

3. Verfahren nach einem der vorhergehenden Ansprüche, wobei die Werkzeugspitze (16) wenigstens eines der beiden Werkzeuge (7) ausgehend von einer Startposition, die bezogen auf die Rotation des Wälzlagerrings (3) in einem radialen und/oder axialen Endbereich des Oberflächenbereichs (4, 6) angeordnet ist, über den Oberflächenbereich (4, 6) geführt wird.

4. Verfahren nach einem der vorhergehenden Ansprüche, wobei die Werkzeugspitzen (16) der beiden Werkzeuge (7) ausgehend von bezogen auf die Rotation des Wälzlagerrings (3) zueinander entgegengesetzten radialen und/oder axialen Endbereichen des Oberflächenbereichs (4, 6) über den Oberflächenbereich (4, 6) geführt werden.

5. Verfahren nach einem der vorhergehenden Ansprüche, wobei die Bahnkurven (27, 28) bereichsweise nicht überlappend ausgebildet werden.

6. Verfahren nach einem der vorhergehenden Ansprüche, wobei sich der Überlappungsbereich (26) wenigstens über eine Hauptbelastungszone (23) des Oberflächenbereichs (4, 6) erstreckt, in der ein Lastverhältnis, das als das Verhältnis der bei einer maximal zulässigen Belastung des Wälzlagerrings (3) am jeweiligen Ort auftretenden Last zu einer im gesamten Oberflächenbereich (4, 6) maximal auftretenden Last definiert ist, durchgehend wenigstens einen vorgegebenen Mindestwert aufweist.

7. Verfahren nach Anspruch 6, wobei die Startpositionen der Werkzeugspitzen (16) der beiden Werkzeuge (7) jeweils außerhalb der Hauptbelastungszone (23) liegen.

8. Verfahren nach einem der vorhergehenden Ansprüche, wobei
- die Werkzeugspitze (16) wenigstens eines der beiden Werkzeuge (7) beim Bearbeiten des Wälzlagerrings (3) innerhalb einer Kontaktzone berührend am Oberflächenbereich (4, 6) des Wälzlagerrings (3) anliegt,
- die Andruckkraft längs einer Kraftrichtung wirkt und
- in einer Vorschubebene, die durch eine in der Kontaktzone senkrecht zum Oberflächenbereich (4, 6) orientierten Oberflächennormale (13) und eine Vorschubrichtung, in der das Werkzeug (7) bewegt wird, aufgespannt ist, die Kraftrichtung zur Vorschubrichtung hin geneigt ist und einen Winkel von wenigstens 2° mit der Oberflächennormalen (13) einschließt.

9. Verfahren nach einem der vorhergehenden Ansprüche, wobei die Werkzeugspitze (16) wenigstens eines der beiden Werkzeuge (7) mit einer Geschwindigkeit von 0,05 mm/Umdrehung bis 0,15 mm/Umdrehung bewegt wird.

10. Verfahren nach einem der vorhergehenden Ansprüche, wobei der Oberflächenbereich (4, 6) eine Bahngeschwindigkeit von 50 m/min bis 150 m/min aufweist.

11. Verfahren nach einem der vorhergehenden Ansprüche, wobei die Werkzeugspitze (16) wenigstens eines der beiden Werkzeuge (7) mit einer Andruckkraft von 200 N bis 750 N gegen den Oberflächenbereich (4, 6) gepresst wird.

12. Verfahren nach einem der vorhergehenden Ansprüche, wobei in Vorschubrichtung des Werkzeugs (7) und in Rotationsrichtung des Wälzlagerrings (3) vor der Werkzeugspitze (16) auf dem Oberflächenbereich (4, 6) des Wälzlagerrings (3) ein Film aus einem Kühl- und/oder Schmiermedium ausgebildet wird.

13. Verfahren nach einem der vorhergehenden Ansprüche, wobei der Oberflächenbereich (4, 6) nach dem spanlosen Bearbeiten gehont oder einer Gleitschleifbehandlung unterzogen wird.

14. Wälzlagerring mit einem Oberflächenbereich (4, 6), der zwei schraubenlinienförmig oder spiralförmig ausgebildete Druckeigenspannungsmuster aufweist, die bereichsweise überlappen und sich im Überlappungsbereich (26) vielfach kreuzen.

15. Wälzlager mit einem Wälzlagerring (3) nach Anspruch 14.

## Claims

1. Method for non-cutting machining of a surface region (4, 6) of an anti-friction bearing ring (3),
- the anti-friction bearing ring (3) being set in rotation relative to two tools (7) which have in each case one tool tip (16),
- the tool tips (16) of the two tools (7) being guided over the surface region (4, 6) starting from different starting positions in an opposed movement with respect to one another with regard to the surface region (4, 6) of the rotating anti-friction bearing ring (3) and in the process being pressed with a pressure force against the surface region (4, 6), with the result that a helical or a spiral trajectory (27, 28) is configured by each tool tip (16) on the surface region (4, 6) in such a way that the trajectories (27, 28) overlap in regions and cross one another multiple times in the overlapping region (26).

2. Method according to Claim 1, the tool tips (16) of the two tools (7) being guided over the surface region (4, 6) starting from starting positions which are offset by 180° with respect to one another in relation to the rotation of the anti-friction bearing ring (3).

3. Method according to either of the preceding claims, the tool tip (16) of at least one of the two tools (7) being guided over the surface region (4, 6) starting from a starting position which is arranged in a radial and/or axial end region of the surface region (4, 6) in relation to the rotation of the anti-friction bearing ring (3).

4. Method according to one of the preceding claims, the tool tips (16) of the two tools (7) being guided over the surface region (4, 6) starting from radial and/or axial end regions of the surface region (4, 6) which lie opposite one another in relation to the rotation of the anti-friction bearing ring (3).

5. Method according to one of the preceding claims, the trajectories (27, 28) being of non-overlapping configuration in regions.

6. Method according to one of the preceding claims, the overlapping region (26) extending at least over a main loading zone (23) of the surface region (4, 6), in which main loading zone (23) a load ratio which is defined as the ratio of the load which occurs at the respective location in the case of maximum permissible loading of the anti-friction bearing ring (3) to a maximum occurring load in the entire surface region (4, 6) continuously has at least a predefined minimum value.

7. Method according to Claim 6, the starting positions of the tool tips (16) of the two tools (7) lying in each case outside the main loading zone (23).

8. Method according to one of the preceding claims,
- the tool tip (16) of at least one of the two tools (7) bearing with contact against the surface region (4, 6) of the anti-friction bearing ring (3) within a contact zone during machining of the anti-friction bearing ring (3),
- the pressure force acting along a direction of force, and
- the direction of force being inclined towards the advancing direction in an advancing plane which is defined by a surface normal (13) which is oriented perpendicularly with respect to the surface region (4, 6) in the contact zone and by an advancing direction, in which the tool (7) is moved, and encloses an angle of at least 2° with the surface normal (13).

9. Method according to one of the preceding claims, the tool tip (16) of at least one of the two tools (7) being moved at a velocity of from 0.05 mm/revolution to 0.15 mm/revolution.

10. Method according to one of the preceding claims, the surface region (4, 6) having a path velocity of from 50 m/min to 150 m/min.

11. Method according to one of the preceding claims, the tool tip (16) of at least one of the two tools (7) being pressed with a pressure force of from 200 N to 750 N against the surface region (4, 6).

12. Method according to one of the preceding claims, a film being formed from a cooling and/or lubricating medium on the surface region (4, 6) of the anti-friction bearing ring (3) in front of the tool tip (16) in the advancing direction of the tool (7) and in the rotational direction of the anti-friction bearing ring (3).

13. Method according to one of the preceding claims, the surface region (4, 6) being honed or subjected to a vibratory grinding treatment after the non-cutting machining.

14. Anti-friction bearing ring having a surface region (4, 6) which has two residual compressive stress patterns of helical or spiral configuration which overlap in regions and cross one another multiple times in the overlapping region (26).

15. Anti-friction bearing having an anti-friction bearing ring (3) according to Claim 14.

## Revendications

1. Procédé d'usinage sans enlèvement de copeaux d'une région de surface (4, 6) d'une bague de palier à roulement (3), dans lequel
- la bague de palier à roulement (3) est mise en rotation par rapport à deux outils (7) qui présentent chacun une pointe d'outil (16),
- les pointes d'outil (16) des deux outils (7) sont guidées sur la région de surface (4, 6) à partir de positions de départ différentes suivant un mouvement opposé l'une à l'autre par rapport à la région de surface (4, 6) de la bague de palier à roulement (3) en rotation et sont en l'occurrence pressées avec une force d'application contre la région de surface (4, 6), de sorte que sur la région de surface (4, 6) de chaque pointe d'outil (16) soit réalisée une trajectoire (27, 28) de forme hélicoïdale ou de forme spirale de telle sorte que les trajectoires (27, 28) se chevauchent partiellement et se croisent plusieurs fois dans la région de chevauchement (26).

2. Procédé selon la revendication 1, dans lequel les pointes d'outil (16) des deux outils (7) sont guidées sur la région de surface (4, 6) à partir de positions de départ qui sont décalées de 180° l'une par rapport à l'autre par rapport à la rotation de la bague de palier à roulement (3).

3. Procédé selon l'une quelconque des revendications précédentes, dans lequel la pointe d'outil (16) d'au moins l'un des deux outils (7) est guidée sur la région de surface (4, 6) à partir d'une position de départ qui est disposée dans une région d'extrémité radiale et/ou axiale de la région de surface (4, 6) par rapport à la rotation de la bague de palier à roulement (3).

4. Procédé selon l'une quelconque des revendications précédentes, dans lequel les pointes d'outils (16) des deux outils (7) sont guidées sur la région de surface (4, 6) à partir de régions d'extrémité radiales et/ou axiales de la région de surface (4, 6) opposées l'une à l'autre par rapport à la rotation de la bague de palier à roulement (3).

5. Procédé selon l'une quelconque des revendications précédentes, dans lequel les trajectoires (27, 28) sont réalisées de manière à partiellement ne pas se chevaucher.

6. Procédé selon l'une quelconque des revendications précédentes, dans lequel la région de chevauchement (26) s'étend au moins sur une zone de sollicitation principale (23) de la région de surface (4, 6) dans laquelle un rapport de charge, qui est défini comme le rapport de la charge se produisant lors d'une sollicitation maximale admissible de la bague de palier à roulement (3) à l'endroit respectif à une charge maximale se produisant dans la région de surface totale (4, 6), présente constamment au moins une valeur minimale prédéfinie.

7. Procédé selon la revendication 6, dans lequel les positions de départ des pointes d'outils (16) des deux outils (7) sont situées à chaque fois à l'extérieur de la zone de sollicitation principale (23).

8. Procédé selon l'une quelconque des revendications précédentes, dans lequel
- la pointe d'outil (16) d'au moins l'un des deux outils (7), lors de l'usinage de la bague de palier à roulement (3), s'applique à l'intérieur d'une zone de contact en contact avec la région de surface (4, 6) de la bague de palier à roulement (3),
- la force d'application agit le long d'une direction de force et
- dans un plan d'avance, qui est formé par une normale à la surface (13) orientée perpendiculairement à la région de surface (4, 6) dans la zone de contact et une direction d'avance dans laquelle l'outil (7) est déplacé, la direction de la force est inclinée par rapport à la direction d'avance et forme un angle d'au moins 2° avec la normale à la surface (13).

9. Procédé selon l'une quelconque des revendications précédentes, dans lequel la pointe d'outil (16) d'au moins l'un des deux outils (7) est déplacée avec une vitesse de 0,05 mm/tour à 0,15 mm/tour.

10. Procédé selon l'une quelconque des revendications précédentes, dans lequel la région de surface (4, 6) présente une vitesse de bande de 50 m/min à 150 m/min.

11. Procédé selon l'une quelconque des revendications précédentes, dans lequel la pointe d'outil (16) d'au moins l'un des deux outils (7) est pressée avec une force d'application de 200 N à 750 N contre la région de surface (4, 6).

12. Procédé selon l'une quelconque des revendications précédentes, dans lequel, dans la direction d'avance de l'outil (7) et dans la direction de rotation de la bague de palier à roulement (3) avant la pointe d'outil (16), un film d'un agent de refroidissement et/ou de lubrification est réalisé sur la région de surface (4, 6) de la bague de palier à roulement (3).

13. Procédé selon l'une quelconque des revendications précédentes, dans lequel la région de surface (4, 6) après l'usinage sans enlèvement de copeaux est rodée ou est soumise à un traitement de ponçage.

14. Bague de palier à roulement comprenant une région de surface (4, 6) qui présente deux motifs de tension propre de compression réalisés avec une forme hélicoïdale ou spirale, qui se chevauchent partiellement et qui se croisent plusieurs fois dans la région de chevauchement (26).

15. Palier à roulement comprenant une bague de palier à roulement (3) selon la revendication 14.
